(19) Europäisches Patentamt
European Patent Office
Office européen des brevets

(11) **EP 2 924 609 B1**

(12) **FASCICULE DE BREVET EUROPEEN**

(45) Date de publication et mention
de la délivrance du brevet:
**28.12.2016 Bulletin 2016/52**

(51) Int Cl.:
*G06K 9/00* (2006.01)     *H04L 29/06* (2006.01)
*H04L 9/32* (2006.01)     *G06F 21/62* (2013.01)

(21) Numéro de dépôt: **15151412.2**

(22) Date de dépôt: **16.01.2015**

(54) **PROCÉDÉ D'ENROLEMENT DE DONNÉES DANS UNE BASE POUR LA PROTECTION DESDITES DONNÉES**

VERFAHREN ZUM EINHOLEN VON DATEN IN EINE BASIS ZUM SCHUTZ DIESER DATEN

METHOD FOR ENROLMENT OF DATA IN A DATABASE FOR THE PROTECTION OF SAID DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2014 FR 1452444**

(43) Date de publication de la demande:
**30.09.2015 Bulletin 2015/40**

(73) Titulaire: **Morpho**
**92130 Issy-les-Moulineaux (FR)**

(72) Inventeurs:
• **Bringer, Julien**
**92130 Issy les Moulineaux (FR)**
• **Chabanne, Hervé**
**92130 Issy les Moulineaux (FR)**

(74) Mandataire: **Regimbeau**
**20, rue de Chazelles**
**75847 Paris Cedex 17 (FR)**

(56) Documents cités:
• **MIKHAILJ ATALLAH ET AL: "Secure Biometric Authentication for Weak Computational Devices", 2 août 2005 (2005-08-02), FINANCIAL CRYPTOGRAPHY AND DATA SECURITY : 9TH INTERNATIONAL CONFERENCE, FC 2005, ROSEAU, THE COMMONWEALTH OF DOMINICA, FEBRUARY 28 - MARCH 3, 2005; [LECTURE NOTES IN COMPUTER SCIENCE;;LNCS], SPRINGER-VERLAG, BERLIN/HEIDELBERG, PAGE(S) 357 - 371, XP019011820, ISBN: 978-3-540-26656-3 * page 364 - page 367 ***
• **JULIEN BRINGER ET AL: "An Application of the Naccache-Stern Knapsack Cryptosystem to Biometric Authentication", 2007 IEEE WORKSHOP ON AUTOMATIC IDENTIFICATION ADVANCED TECHNOLOGIES, 1 juin 2007 (2007-06-01), pages 180-185, XP055134743, DOI: 10.1109/AUTOID.2007.380616 ISBN: 978-1-42-441300-3**
• **MICHAEL J WILBER ET AL: "PRIVV: Private remote iris-authentication with Vaulted Verification", COMPUTER VISION AND PATTERN RECOGNITION WORKSHOPS (CVPRW), 2012 IEEE COMPUTER SOCIETY CONFERENCE ON, IEEE, 16 juin 2012 (2012-06-16), pages 97-104, XP032206844, DOI: 10.1109/CVPRW.2012.6239222 ISBN: 978-1-4673-1611-8**

EP 2 924 609 B1

**Description**

DOMAINE DE L'INVENTION

Le domaine de l'invention est celui des procédés d'enrôlement de données, particulièrement de données biométriques, dans une base de données, garantissant la sécurité des données une fois enrôlées dans la base, et des bases de données comprenant de telles données.
L'invention s'applique notamment à l'enrôlement de données biométriques d'iris.

ETAT DE LA TECHNIQUE

Une donnée biométrique, notamment d'iris ou de veine, comprend en général deux vecteurs binaires de taille identique : un premier vecteur, dit d'information, contient l'information sur un trait biométrique acquis sur une personne. Le second vecteur, dit de masque, comporte l'information de savoir si des parties correspondantes du vecteur d'information doivent être prises en compte pour réaliser une comparaison de données.
Ainsi par exemple, dans le cas où une donnée biométrique est une image d'iris, le vecteur d'information est par exemple généré en faisant l'acquisition d'une image en couleur de l'iris, puis en convertissant cette image en nuances de gris, et en fin en opérant un seuillage sur les nuances de gris pour obtenir des informations binaires.
Le vecteur d'information est organisé de telle sorte que des zones adjacentes d'un iris correspondent à des bits successifs dans le vecteur.
D'autre part, le vecteur de masque, qui comprend un ensemble de bits indexés correspondant aux bits du vecteur d'information, détermine les bits du vecteur d'information à prendre en compte pour une comparaison. Si par exemple une partie d'un iris est occultée par une paupière, quelle que soit la valeur du bit dans le vecteur d'information correspondant à cette partie, le bit du vecteur de masque correspondant indique par sa valeur, 0, ou 1, qu'il ne faut pas la prendre en compte.
De telles données sont stockées dans des bases de données pour réaliser des identifications ou authentifications d'individus par comparaison avec d'autres données biométriques. Les comparaisons sont le plus souvent réalisées par le calcul de la distance de Hamming entre deux données, qui recense le nombre de pixels différents entre les deux données.
Pour des données du type décrit ci-avant, qui comprennent un vecteur de masque, la distance de Hamming s'écrit :

$$(i \oplus i') \cap (m \cap m')$$

Où i et i' sont les vecteurs d'informations de deux données, et m et m' sont les vecteurs de masque, qui comprennent des bits à 1 pour les zones non occultées, ou zones à prendre en compte pour la comparaison, et des bits à 0 pour les zones à ne pas prendre en compte pour la comparaison (zones occultées ou douteuses).
Ainsi, la distance de Hamming est calculée en ne prenant en compte que les parties des vecteurs d'information à prendre en compte pour la comparaison.
Afin de protéger de telles données stockées dans des bases de données, il a été proposé d'appliquer une permutation sur le vecteur d'information et le vecteur de masque, la permutation étant identique pour les deux vecteurs.
Ceci permet en effet de préserver la distance de Hamming entre deux données permutées de façon identique.
Or, il est possible de retrouver la permutation utilisée sur une donnée biométrique à partir du couple x, p(x), ou x désigne une donnée comprenant un vecteur d'information et un vecteur de masque, et p(x) la donnée permutée, ou même à partir d'un couple x, p(x').
En effet, pour retrouver la permutation on peut toujours exploiter, les bits du vecteur de masque à 0 pour trouver les zones géographiques de l'iris qui sont occultées (par exemple par les cils ou les paupières). On peut également exploiter les liens existants entre des bits successifs du vecteur d'information, qui correspondent à des corrélations géographiques dans des zones de l'iris.
Par conséquent, il est nécessaire de protéger d'avantage les données biométriques du type comprenant deux vecteurs : un vecteur d'information, et un vecteur de masque, Documents MIKHAILJ ATALLAH ET AL: "Secure Biometric Authentication for Weak Computational Devices", 2 août 2005; ULIEN BRINGER ET AL: "An Application of the Naccache-Stern Knapsack Cryptosystem to Biometric Authentication", 1 juin 2007 et MICHAEL J WILBER ET AL: "PRIVV: Private remote iris-authentication with Vaulted Verification", 16 juin 2012 décrivent des techniques d'enrôlement et de comparaison de données biométriques pour des authentifications.

PRESENTATION DE L'INVENTION

Un but de l'invention est de proposer un procédé d'enrôlement de données biométriques présentant une sécurité accrue par rapport à l'art antérieur.

Un autre but de l'invention est de proposer un procédé d'enrôlement de données pour une base, et un procédé d'acquisition d'une donnée à comparer à une donnée de la base, qui permettent de procéder au calcul d'une distance de Hamming entre les deux données.

A cet égard, l'invention a pour objet le procédé d'enrôlement de données biométriques dans une base de données, chaque donnée comprenant un vecteur binaire d'information sur un trait biométrique, et un vecteur binaire de masque, déterminant les bits du vecteur d'information à prendre en compte pour une comparaison de données, le procédé comprenant l'application d'une permutation sur les bits du vecteur d'information et du vecteur de masque, le procédé étant caractérisé en ce qu'il comprend en outre une étape d'encodage des vecteurs par un code dit d'enrôlement, la permutation étant mise en oeuvre sur les vecteurs encodés, et ledit encodage comprend :

- la représentation de chaque bit du vecteur de masque en une séquence de plusieurs bits, telle que le poids moyen des représentations de l'ensemble des bits du vecteur de masque est constant ou statistiquement constant quelles que soient les valeurs des bits du vecteur de masque, et
- la représentation de chaque bit du vecteur d'information en une séquence comprenant au moins un bit tiré aléatoirement, les bits tirés aléatoirement suivant la même loi de distribution que les bits du vecteur d'information.

Avantageusement, mais facultativement, le procédé d'enrôlement selon l'invention peut en outre comprendre au moins l'une des caractéristiques suivantes :

- la séquence de bits représentant l'encodage d'un bit du vecteur d'information à prendre en compte pour une comparaison de données comprend au moins un bit tiré aléatoirement et le bit du vecteur d'information.
- la permutation mise en place sur les vecteurs et encodés est identique, et la position du bit du vecteur d'information dans la séquence de bits représentant l'encodage d'un bit à prendre en compte pour une comparaison de données correspond à la position d'un bit à 1 de la séquence de bits représentant l'encodage d'un bit du vecteur de masque.
- la position du bit du vecteur d'information dans la séquence de bits représentant l'encodage d'un bit à prendre en compte pour une comparaison de données ne correspond pas à la position d'un bit à 1 de la séquence de bits représentant l'encodage d'un bit du vecteur de masque, et l'étape de permutation comprend l'application de permutations distinctes sur les séquences de bits représentant les encodages du vecteur d'information et du vecteur de masques, les permutations étant adaptées pour que la position du bit du vecteur d'information après permutation corresponde à un bit à 1 de la séquence de bit du vecteur de masque encodé après permutation.
- la séquence de bits représentant l'encodage d'un bit du vecteur d'information à ne pas prendre en compte pour une comparaison de données comprend un unique bit tiré aléatoirement ou un bit tiré aléatoirement et le bit du vecteur d'information.
- la séquence de bits représentant l'encodage d'un bit (m) du vecteur de masque comprend une séquence Y de n-1 bits et le bit du vecteur de masque, la séquence Y de bits pouvant prendre $2^{n-1}$ valeurs $Y_1,...,Y_{2^{(n-1)}}$, et les probabilités $\alpha_1,...\alpha_{2^{(n-1)}}$ de choisir la valeur $Y_1,...,Y_{2^{(n-1)}}$ quand le bit du vecteur de masque est 0 et $b_1,...,b_{2^{(n-1)}}$ de choisir la valeur $Y_1,...,Y_{2^{(n-1)}}$ quand le bit du vecteur de masque est 1 est comme suit :

$$\sum_{i=1}^{2^{n-1}} [Poids(Y_i) * \alpha_i] = \sum_{i=1}^{2^{n-1}} [(Poids(Y_i) + 1) * \beta_i]$$

- les valeurs que peut prendre la séquence Y de bits sont fixées ou tirées aléatoirement.
- le nombre de bits à 1 d'une séquence de bits représentant l'encodage d'un bit du vecteur de masque présente un poids moyen statistiquement constant de n/2.
- Le procédé comprend en outre, après l'application de la permutation, la multiplication du vecteur de masque encodé par une matrice inversible.

L'invention a également pour objet une base de données comprenant au moins une donnée biométrique enrôlée par la mise en oeuvre du procédé d'enrôlement selon la présentation qui précède.

Un autre objet de l'invention est un procédé d'acquisition d'une nouvelle donnée biométrique comprenant un vecteur binaire d'information sur un trait biométrique, et un vecteur binaire de masque déterminant les bits du vecteur d'information à prendre en compte pour la comparaison, ladite donnée étant acquise pour sa comparaison avec une donnée enrôlée dans une base de données par la mise en oeuvre du procédé selon l'une des revendications qui précèdent, le procédé comprenant l'application d'une permutation à la nouvelle donnée biométrique, l'encodage de la nouvelle donnée biométrique par un code dit de vérification, la permutation étant mise en oeuvre sur la donnée encodée, et dans lequel :

- ledit encodage et la permutation sont adaptés pour préserver la valeur de la distance de Hamming ou de la distance de Hamming pondérée entre la nouvelle donnée et la donnée de la base après leur encodage respectif,
- l'encodage de la nouvelle donnée comprend la représentation de chaque bit des vecteurs de la donnée par une séquence comprenant un nombre de bits égal au nombre de bits dans les séquences représentant les vecteurs encodés des données de la base,
- la permutation appliquée à la nouvelle donnée est identique à la permutation appliquée à la donnée de la base lors de son enrôlement

et la représentation des bits du vecteur de masque est en outre adaptée pour que seule l'intersection des deux séquences de bits représentant les bits de vecteurs de masques correspondant à des zones à prendre en compte pour la comparaison soit non nulle.

Avantageusement, mais facultativement, un procédé de traitement de données comprenant l'acquisition d'une nouvelle donnée biométrique par la mise en oeuvre du procédé d'acquisition qui précède, et la comparaison de la nouvelle donnée biométrique avec une donnée enrôlée dans une base de données selon la présentation qui précède, ladite comparaison comprenant le calcul d'une distance de Hamming pondérée entre la nouvelle donnée encodée par le code de vérification et la donnée encodée de la base.

Avantageusement, mais facultativement, le procédé de traitement de données selon l'invention comprend en outre au moins l'une des caractéristiques suivantes :

- la nouvelle donnée comprend un vecteur binaire d'information sur un trait biométrique, et un vecteur binaire de masque déterminant les bits du vecteur d'information à prendre en compte pour la comparaison, et l'encodage de la nouvelle donnée comprend la représentation de chaque bit des vecteurs de la donnée par une séquence comprenant un nombre de bits égal au nombre de bits dans les séquences représentant les vecteurs encodés des données de la base, la permutation appliquée à la nouvelle donnée étant identique à la permutation appliquée à la donnée de la base lors de son enrôlement, et la représentation des bits du vecteur de masque étant en outre adaptée pour que seule l'intersection des deux séquences de bits représentant les bits de vecteurs de masques correspondant à des zones à prendre en compte pour la comparaison soit non nulle.
- la donnée biométrique enrôlée dans la base de données a été enrôlée par le procédé selon la description qui précède comprenant, après l'application de la permutation, la multiplication du vecteur de masque encodé par une matrice inversible, et la comparaison comprend :

  o la génération d'une matrice inverse de la matrice inversible multipliée au vecteur du masque lors de l'enrôlement de la donnée de la base,
  o la multiplication de la séquence de bits représentant le vecteur du masque encodé de la donnée de la base par la matrice inverse, et
  o le calcul d'une distance de Hamming pondérée entre la nouvelle donnée encodée par le code de vérification et la donnée encodée de la base obtenue à l'issue de la multiplication.

L'invention a enfin pour objet un système comprenant une base de données selon la présentation qui précède, et au moins un serveur de gestion de la base de données, comprenant des moyens de traitement adaptés pour mettre en oeuvre, sur une donnée comprenant deux vecteurs binaires, comprenant un vecteur binaire d'information sur un trait biométrique, et un vecteur binaire de masque, déterminant les bits du vecteur d'information à prendre en compte pour une comparaison de la donnée, un procédé d'encodage d'enrôlement, comprenant :

- la représentation de chaque bit du vecteur de masque en une séquence de plusieurs bits, telle que le poids moyen des représentations de l'ensemble des bits du vecteur de masque est constant quelles que soient les valeurs des bits du vecteur de masque, et
- la représentation de chaque bit du vecteur d'information en une séquence comprenant au moins un bit tiré aléatoirement, les bits tirés aléatoirement suivant la même loi de distribution que les bits du vecteur d'information.

Le procédé d'enrôlement proposé permet d'accroître la sécurité des données enrôlées dans une base de données, puisque l'encodage permet d'équilibrer la distribution des bits d'un vecteur de masque, afin de ne pas trahir, par la position des 0 ou des 1, la position d'un point caractéristique de la donnée biométrique comme par exemple la paupière pour une image d'iris.

L'encodage d'enrôlement permet également de supprimer les liens entre des bits successifs du vecteur d'information en ajoutant une composante aléatoire dans la représentation encodée de ce vecteur.

Le fait de garder la même loi de distribution que le vecteur d'information permet de rendre les composantes aléatoires indétectables.

Le procédé d'acquisition proposé permet en outre de comparer une nouvelle donnée à une donnée enrôlée dans la base par le procédé décrit ci-avant par le calcul d'une distance de Hamming ou distance de Hamming pondérée entre ces données, en adaptant l'encodage de vérification à l'encodage d'enrôlement.

## DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un système comprenant une base de données,
- La figure 2 représente les principales étapes d'un procédé d'enrôlement de données dans une base de données.
- La figure 3 représente les principales étapes d'un procédé d'acquisition d'une nouvelle donnée et de comparaison avec une donnée de la base.

## DESCRIPTION DETAILLEE D'AU MOINS UN MODE DE REALISATION

### Système de stockage de données

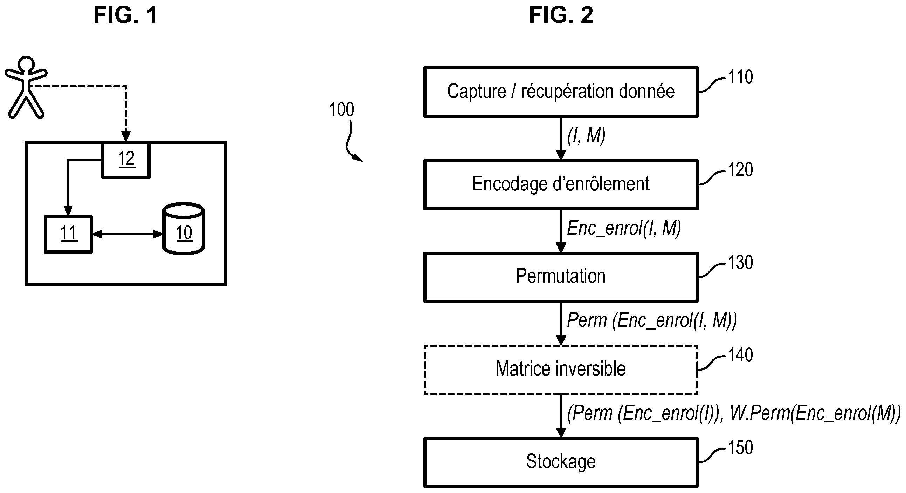

En référence à la figure 1, on a représenté un système 1 comprenant une base de données 10 dans laquelle sont enregistrées, ou enrôlées, des données numériques sous forme de séquences de bits, également appelées dans la suite vecteurs binaires.

Les données sont avantageusement des données biométriques, comme par exemple des images d'iris ou de réseaux veineux.

Chaque donnée comprend deux vecteurs binaires : un premier vecteur I, dit d'information, contenant l'information sur un trait biométrique acquis sur une personne, et le second vecteur M, dit de masque, comportant l'information de savoir si des parties correspondantes du vecteur d'information doivent être prises en compte pour réaliser une comparaison de données.

Selon un premier mode de réalisation, les deux vecteurs binaires I et M sont de tailles identiques. Ainsi, chaque vecteur I, M comprend une séquence de bits resp. i, m, indexés, et la valeur d'un bit m du vecteur de masque M indique si le bit i de même index du vecteur d'information I doit être pris en compte pour réaliser une comparaison de données.

En variante, les deux vecteurs I et M peuvent être de tailles différentes. Par exemple, une position géographique d'un trait biométrique peut être représentée par plusieurs bits i du vecteur d'information I et par un seul bit de masque m.

Dans l'exemple qui suit, on considère qu'un bit à 1 du vecteur de masque M indique un ou plusieurs bits à prendre en compte du vecteur d'information I, et un bit à 0 indique un ou plusieurs bit à ne pas prendre en compte du vecteur d'information I. Dans le cas d'une image d'iris, il peut s'agir d'une zone occultée par une paupière ou des cils.

Le système 1 comprend en outre un serveur 11 de gestion de la base, adapté pour accéder à la base de données 10 en lecture et en écriture, et qui comprend des moyens de traitement, par exemple un processeur, permettant de mettre en oeuvre l'enrôlement décrit ci-après, ainsi que le cas échéant l'acquisition d'une nouvelle donnée et la comparaison de cette donnée avec une donnée de la base.

Dans le cas où la base de données 10 stocke des données biométriques, cette base 10 est donc utilisée pour réaliser des authentifications ou identifications biométriques sur des individus à partir de données biométriques acquises sur l'individu et comparées aux données de la base.

Le système 1 comprend en outre un capteur 12 de donnée biométrique, qui est choisi en fonction de la nature du trait biométrique sur lequel est prélevée la donnée.

Ce capteur 12 peut être utilisé pour acquérir une donnée à enrôler dans la base de données 10 ou pour acquérir une nouvelle donnée à comparer à une donnée de la base lors d'une authentification ou d'une identification.

### Présentation du procédé d'enrôlement

On va maintenant décrire, en référence à la figure 2, un procédé d'enrôlement 100 d'une donnée dans la base 10.

Une première étape 110 de ce procédé consiste à obtenir une donnée à enrôler dans la base 10. Cette étape peut être mise en oeuvre en capturant une donnée sur un individu par le capteur 12, ou par récupération de la donnée sur un autre support. Par exemple, cette donnée pourrait se trouver dans un réseau auquel le serveur de gestion 11 à accès, ou dans un document d'identité d'un individu, etc.

La donnée ainsi récupérée comporte les deux vecteurs binaires I et M décrits ci-avant.

Cette donnée est ensuite encodée 120 par un premier code dit d'enrôlement enc_enrol. Cette étape est de préférence mise en oeuvre par le serveur de gestion 11 et est décrite plus en détails ci-dessous.

Comme décrit ci-après, le procédé comprend ensuite l'application d'une permutation 130, adaptée à l'encodage, de préférence identique sur les représentations encodées des vecteurs d'information et de masque.

De manière optionnelle, le serveur de gestion peut en outre multiplier le vecteur de masque encodé et permuté par une matrice inversible W tirée au hasard au cours d'une étape 140, ce qui permet de rendre plus complexe la transformation apportée aux vecteurs et il est donc plus difficile de retrouver l'information de départ.

Enfin, lors d'une étape 150, le serveur de gestion 11 enregistre dans la base de données la donnée ainsi encodée.

*Encodage d'enrôlement*

De retour à l'étape 120 d'encodage d'enrôlement, cet encodage est appliqué sur les deux vecteurs binaires I, M de façons différentes.

L'encodage d'enrôlement enc_enrol appliqué au vecteur de masque M comprend la représentation de chaque bit m du vecteur par une séquence de bits comprenant au moins deux bits, les séquences de bits représentant les bits encodés du vecteur de masque présentant un poids moyen constant ou statistiquement constant sur l'ensemble de l'encodage du vecteur de masque, quelles que soient les valeurs des bits du vecteur de masque.

Par poids moyen statistiquement constant, on entend que le poids moyen des séquences de bits sur l'ensemble de l'encodage du vecteur de masque M tend vers une valeur fixée.

Avantageusement, la séquence de bits représentant l'encodage d'un bit m du vecteur de masque comprend n bits, dont les n-1 premiers forment un vecteur $Y = y_1\|...\|y_{n-1}$ et dont le dernier est le bit du vecteur de masque.

Le vecteur Y peut être fixé de manière déterminée, en lui associant une valeur pour m=0, et une autre valeur pour m=1, ou tiré aléatoirement, mais de manière à respecter la contrainte que le nombre de bits à 1 (et donc à 0) dans $Y\|m$ soit constant en moyenne sur la représentation encodée du vecteur M de masque, que m soit égal à 0 ou à 1.

On peut satisfaire cette condition, si on écrit $Y_1...Y_{2^{(n-1)}}$ les valeurs possibles du vecteur Y, en associant une probabilité $\alpha_i$ au fait de prendre la valeur $Y_i$ pour m=0, et une probabilité $\beta_i$ au fait de prendre cette valeur pour m=1, les probabilités $\alpha_i$ et $\beta_i$ étant contraintes comme suit :

$$\sum_{i=1}^{2^{n-1}} [Poids(Y_i) * \alpha_i] = \sum_{i=1}^{2^{n-1}} [(Poids((Y_i)) + 1) * \beta_i]$$

Le poids d'une séquence de bits est le poids de Hamming, c'est-à-dire le nombre de bits à 1 dans la séquence.

Cette condition équivaut à l'autre condition suivante (qui est donc respectée si la première condition l'est) :

$$\sum_{i=1}^{2^{n-1}} [n - Poids(Y_i) * \alpha_i] = \sum_{i=1}^{2^{n-1}} [n - 1 - Poids((Y_i)) * \beta_i]$$

L'encodage proposé permet de rendre non-distinguable une position « masquée », c'est-à-dire correspondant à un bit du vecteur d'information à ne pas prendre en compte pour la comparaison, d'une position « non masquée » en regardant un bit de manière isolée.

En effet, lorsque le vecteur de masque n'est pas encodé, il suffit d'examiner les valeurs des bits pour obtenir les informations sur les zones à prendre en compte ou non pour une comparaison entre deux donnés.

Or, une fois le vecteur de masque encodé et la permutation appliquée aux bits de la représentation du vecteur, il n'est pas possible de dire, en considérant isolément un bit, si ce bit provient de la représentation d'un bit à 1 ou d'un bit à 0 du vecteur de masque.

Par exemple, l'encodage du vecteur de masque peut être réalisé comme suit :

Bit de masque= 0 → 10 (Y=1)
Bit de masque = 1 → 01 (Y=0)

Alternativement, lorsque les bits du vecteur de masque sont encodés en des séquences de trois bits, l'encodage peut comprendre la représentation d'un bit à 0 en 110, 100, 010, ou encore 000 et respectivement la représentation d'un bit à 1 en 111, 101, 011, ou 001.

On a donc: $Y_1 = 11$, $Y_2 = 10$, $Y_3 = 01$ et $Y_4 = 00$.

On peut par exemple choisir les probabilités $\alpha_i$ et $\beta_i$ comme suit : $\alpha_1 = \beta_4 = 5/8$, et $\alpha_2 = \alpha_3 = \alpha_4 = \beta_1 = \beta_2 = \beta_3 = 1/8$.

Plus le nombre de bits dans une séquence Y est important, et plus l'encodage des données est sécurisé.

Une condition supplémentaire permettant d'augmenter encore la protection des données encodées dans la base est de fixer, sur l'ensemble des représentations encodées des bits du vecteur de masque, le poids des représentations Y∥m en moyenne à n/2 (où n est la longueur de la séquence de bits représentant l'encodage d'un bit), que m soit égal à 0 ou à 1. Selon l'exemple qui précède, le poids moyen statistiquement constant égal à n/2 est obtenu en adaptant les probabilités $\alpha_i$ et $\beta_i$ de sorte que le poids moyen des données soit statistiquement égal à n/2.

L'encodage d'enrôlement enc_enrol appliqué au vecteur d'information comprend quant à lui la représentation d'un bit du vecteur par une séquence de bits comprenant au moins un bit tiré aléatoirement, mais de sorte que les bits tirés aléatoirement suivent la même loi de distribution que le vecteur d'information.

Ceci permet de supprimer les corrélations entre des bits successifs du vecteur d'information, pour supprimer la possibilité d'en extraire des informations sur la donnée encodée.

Avantageusement, l'encodage de bits à prendre en compte du vecteur d'information, c'est-à-dire selon l'exemple décrit ci-avant de bits correspondant à des bits à 1 du vecteur de masque, comprend avantageusement au moins un bit tiré aléatoirement et le bit initial du vecteur d'information. Ceci permet de préserver l'information contenue dans le vecteur d'information pour mettre en oeuvre par la suite une comparaison entre deux données, par calcul d'une distance de Hamming ou d'une distance de Hamming pondérée, selon un exemple avantageux de réalisation de l'invention, ou d'une autre fonction de comparaison couramment utilisée dans le domaine.

Avantageusement, la position du bit initial du vecteur d'information dans la séquence de bits correspond à la position d'un bit à 1 de la séquence de bits représentant l'encodage du bit du vecteur de masque correspondant. Ceci permet de conserver l'information contenue dans le vecteur pour le calcul de la distance de Hamming, et donc de préserver cette distance lors de l'encodage de la donnée.

Cependant, un bit du vecteur d'information correspondant à une zone masquée (donc dans l'exemple à un bit à 0 du vecteur de masque) peut ne pas comprendre le bit initial du vecteur, et être limité à un ou plusieurs bits tirés aléatoirement.

Alternativement, pour ne pas opérer de distinction dans le codage des bits du vecteur d'information, la représentation encodée d'un bit ne devant pas être pris en compte pour une comparaison comporte tout de même le bit initial ainsi qu'un ou plusieurs bits tirés aléatoirement. Ainsi par exemple, le mode de réalisation préféré de l'encodage d'enrôlement du vecteur d'information est adapté à l'encodage précédent du vecteur de masque et comprend la représentation de chaque bit du vecteur d'information par une séquence de bits A∥i, où $A = a_1 \|...\| a_{(n-1)}$ et i est le bit du vecteur d'information.

Les $a_i$ sont des bits tirés au hasard mais respectant la distribution des bits i du vecteur d'information. Ainsi par exemple, si la probabilité $P(x=0) = \eta$, les ai sont tirés en suivant la même probabilité $\eta$ d'être égaux à 0.

Pour reprendre l'exemple précédemment donné sur des séquences de deux bits représentant les vecteurs binaires, on obtient ainsi l'encodage suivant :

$$\text{Enc\_enrol}(x, 0) = (ax, 10)$$

$$\text{Enc\_enrol}(x, 1) = (a'x, 01).$$

Où a et a' sont des bits tirés aléatoirement et suivant la distribution des bits du vecteur d'information.

Pour reprendre également l'exemple précédent donné sur des séquences de trois bits représentant les vecteurs binaires, on obtient également l'encodage suivant :

$$\text{Enc\_enrol}(x, 0) = (abx, 110) \text{ ou } (abx, 100) \text{ ou } (abx, 010) \text{ ou } (abx, 000)$$

$$\text{Enc\_enrol}(x, 1) = (cdx, 111) \text{ ou } (cdx, 101) \text{ ou } (cdx, 011) \text{ ou } (cdx, 001).$$

Ici encore, la mise en oeuvre de la permutation sur la représentation encodée des bits du vecteur d'information permet de ne pas pouvoir obtenir, en considérant un bit de manière isolée, d'information sur le bit initial.

Selon un mode de réalisation alternatif, la position du bit initial du vecteur d'information dans la séquence de bits ne correspond pas à la position d'un bit à 1 de la séquence de bits représentant l'encodage du bit du vecteur de masque correspondant, mais alors les permutations appliquées aux séquences de bits encodées des vecteurs I et M lors de l'étape 130 sont différentes, et sont adaptées pour que la position d'un bit du vecteur d'information, après application de la permutation, corresponde à la position d'un bit à 1 après permutation de la séquence de bits représentant l'encodage du vecteur de masque.

Ceci s'applique de manière générale, que le bit du vecteur d'information soit un bit à prendre en compte (bit de masque à 1) ou non (bit de masque à 0).

Cette variante permet également de conserver la valeur de la distance de Hamming entre les données.

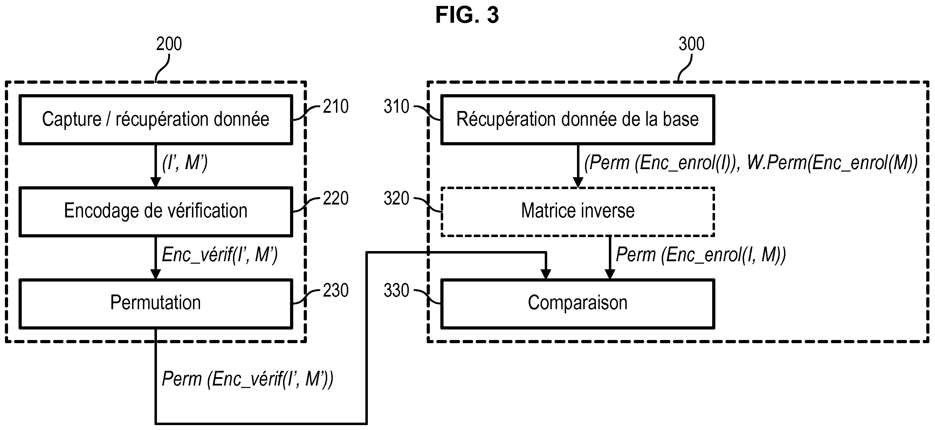

En référence à la figure 3, on va maintenant décrire un procédé d'acquisition d'une nouvelle donnée 200, de préférence d'une donnée biométrique pour la comparer avec une donnée enrôlée dans la base de données 10 selon le procédé qui précède.

Ce procédé est adapté au procédé d'enrôlement ci-avant pour permettre de calculer une distance de Hamming (y compris une distance de Hamming pondérée) sur les données encodées, et donc préserver le résultat de cette distance entre les deux données avant et après encodage.

Pour ce faire, le procédé 200 comprend une première étape 210 d'acquisition d'une nouvelle donnée. Cette étape est avantageusement mise en oeuvre par le capteur 12 par acquisition d'un trait biométrique sur un individu, qui transfère ensuite la donnée au serveur de gestion 11. Alternativement, cette étape est réalisée par récupération d'une donnée biométrique sur un réseau ou sur un document d'identité.

La donnée obtenue comporte, comme les données traitées par le procédé d'enrôlement, deux vecteurs de tailles identiques ; un vecteur d'information et un vecteur de masque. La taille de ces vecteurs est également identique à la taille des vecteurs des données traitées par le procédé d'enrôlement 100.

Le procédé 200 comprend ensuite une étape 220 d'encodage de la donnée ainsi obtenue par un code dit de vérification enc_vérif, qui peut être différent du code d'enrôlement, et qui est adapté à celui-ci pour préserver la distance de Hamming entre les données.

A cet égard, chaque représentation encodée d'un bit du vecteur d'information et du vecteur de masque comprend un nombre de bits identique aux séquences de bits représentant respectivement les vecteurs d'information et de masque encodés de la donnée enrôlée.

De plus, l'encodage des bits du vecteur de masque est adapté pour que seule l'intersection de bits correspondant à des zones des vecteurs d'information à prendre en compte pour une comparaison soit non nulle.

En effet, la distance de Hamming pondérée s'écrit :

$$\frac{\|(I \oplus I') \cap M \cap M'\|}{\|M \cap M'\|}$$

Selon l'exemple qui précède, dans lequel les bits à 1 des vecteurs de masque m, m' correspondent à des zones non occultées d'un trait biométrique, et donc à prendre en compte pour une comparaison, et dans lequel l'encodage d'enrôlement d'un bit du masque s'écrit $Y\|m = y_1\|...\|y_{n-1}$ l'encodage d'un bit m' du vecteur de masque de la nouvelle donnée est avantageusement $0\|...\|0\|m'$.

Pour reprendre l'exemple qui précède où l'encodage d'enrôlement est mis en oeuvre sur deux bits, l'encodage de vérification enc_vérif est donc comme suit :

Bit de masque = 0 → 00
Bit de masque =1 → 01

Il faut donc avoir les deux bits de masque initiaux à 1 pour avoir une intersection non nulle : 10∩00=00 ; 10∩01=00, 00∩01=00 ; 01∩01=01.

Concernant l'encodage de vérification (enc_vérif) du vecteur d'information, il suffit que les séquences obtenues présentent le même nombre de bits que les séquences encodées par le code d'enrôlement, et que la représentation d'un bit correspondant à une zone à prendre en compte pour la comparaison comprenne ledit bit, à une position en regard d'un bit à 1 de la représentation encodée du bit correspondant du vecteur de masque.

Suivant l'exemple qui précède où l'encodage d'enrôlement d'un bit d'information s'écrit $A\|i$, l'encodage d'un bit d'information i' de la nouvelle donnée peut être du type $A'\|i$, où $A'=a'\|...\|a'_{(n-1)}$ et les $a_i$ sont tirés aléatoirement.

On obtient donc l'encodage suivant, selon l'exemple qui précède :

$$\text{Enc\_vérif}(x, 0) = (ax, 00)$$

$$Enc\_enrol(x, 1) = (bx, 01).$$

La mise en oeuvre de la permutation sur les séquences de bits représentant les bits du vecteur d'information permette

Ceci permet de séparer les bits des séquences de bits représentant un même bit initial du vecteur d'information et du vecteur de masque. Il est donc impossible, en examinant un bit de manière isolée, d'en déduire la valeur initiale du bit dont ce bit forme une partie de la séquence encodée.

Le procédé 200 comprend ensuite l'application 220, par le serveur de gestion 11, sur les représentations encodées des vecteurs d'information et de masque, de la même permutation que celle appliquée aux données enrôlées.

Ceci permet de mettre en oeuvre ensuite une comparaison 300 entre la donnée acquise et une donnée de la base par calcul de la distance de Hamming sur les données encodées.

A cet égard, le serveur de gestion 11 de la base récupère 310 une donnée enregistrée dans la base sous forme encodée et permutée.

Facultativement, dans le cas où l'enrôlement des données dans la base de données 10 comprend la multiplication du vecteur de masque encodé et permuté par une matrice inversible, le procédé 200 comprend en outre le calcul 320 de la matrice inverse de la matrice inversible, et la multiplication de la séquence de bits enregistrée dans la base, correspondant au vecteur de masque encodé et permuté, par la matrice inverse.

Enfin le serveur de gestion 11 réalise la comparaison 330 entre les deux données en calculant la distance de Hamming pondérée entre celles-ci, selon la formule fournie précédemment.

Le procédé proposé permet donc, par l'encodage du vecteur de masque suivi de la permutation, de rendre non distinguable les zones masquées des zones non masquées en considérant les bits de manière isolée, et par l'encodage du vecteur d'information, de supprimer les liens entre deux bits successifs du vecteur d'information.

De plus, l'encodage d'enrôlement et l'encodage de vérification préservent la valeur de la distance de Hamming lors de l'encodage, ce qui rend plus rapide l'exécution de la comparaison.

**Revendications**

1. Procédé d'enrôlement (100) de données biométriques (I,M) dans une base de données (10), chaque donnée comprenant un vecteur binaire d'information (I) sur un trait biométrique, et un vecteur binaire de masque (M), déterminant les bits (i) du vecteur d'information à prendre en compte pour une comparaison de données,
   le procédé comprenant l'application (130) d'une permutation sur les bits du vecteur d'information (I) et du vecteur de masque (M),
   le procédé étant **caractérisé en ce qu'**il comprend en outre une étape d'encodage (120) des vecteurs par un code dit d'enrôlement (enc_enrol), la permutation étant mise en oeuvre sur les vecteurs encodés, et ledit encodage comprend :

   - la représentation de chaque bit (m) du vecteur de masque (M) en une séquence de plusieurs bits, telle que le poids moyen des représentations de l'ensemble des bits du vecteur de masque (M) est constant ou statistiquement constant quelles que soient les valeurs des bits (m) du vecteur de masque, et
   - la représentation de chaque bit (i) du vecteur d'information (I) en une séquence comprenant au moins un bit tiré aléatoirement (a), les bits tirés aléatoirement suivant la même loi de distribution que les bits du vecteur d'information.

2. Procédé d'enrôlement (100) selon la revendication 1, dans lequel la séquence de bits représentant l'encodage d'un bit (i) du vecteur d'information (I) à prendre en compte pour une comparaison de données comprend au moins un bit tiré aléatoirement (a) et le bit du vecteur d'information (i).

3. Procédé d'enrôlement (100) selon la revendication 2, dans lequel la permutation mise en place sur les vecteurs (I) et (M) encodés est identique, et la position du bit (i) du vecteur d'information (I) dans la séquence de bits représentant l'encodage d'un bit à prendre en compte pour une comparaison de données correspond à la position d'un bit à 1 de la séquence de bits représentant l'encodage d'un bit du vecteur de masque (M).

4. Procédé d'enrôlement (100) selon la revendication 2, dans lequel la position du bit du vecteur d'information (I) dans la séquence de bits représentant l'encodage d'un bit à prendre en compte pour une comparaison de données ne correspond pas à la position d'un bit à 1 de la séquence de bits représentant l'encodage d'un bit du vecteur de masque, et l'étape de permutation (130) comprend l'application de permutations distinctes sur les séquences de bits représentant les encodages du vecteur d'information et du vecteur de masques, les permutations étant adaptées pour que la position du bit du vecteur d'information après permutation corresponde à un bit à 1 de la séquence de bit du vecteur de masque encodé après permutation.

5.  Procédé d'enrôlement (100) selon l'une des revendications 1 à 4, dans lequel la séquence de bits représentant l'encodage d'un bit (i) du vecteur d'information (I) à ne pas prendre en compte pour une comparaison de données comprend un unique bit tiré aléatoirement ou un bit tiré aléatoirement et le bit du vecteur d'information.

6.  Procédé d'enrôlement (100) selon l'une des revendications qui précèdent, dans lequel la séquence de bits représentant l'encodage d'un bit (m) du vecteur de masque (M) comprend une séquence Y de n-1 bits et le bit (m) du vecteur de masque (M), la séquence Y de bits pouvant prendre $2^{n-1}$ valeurs $Y_1,...,Y_{2^{(n-1)}}$, et les probabilités $\alpha_1,...\alpha_{2^{(n-1)}}$ de choisir la valeur $Y_1,...,Y_{2^{(n-1)}}$ quand le bit du vecteur de masque est 0 et $b_1,...,b_{2^{(n-1)}}$ de choisir la valeur $Y_1,...,Y_{2^{(n-1)}}$ quand le bit du vecteur de masque est 1 est comme suit :

$$\sum_{i=1}^{2^{n-1}} [Poids(Y_i) * \alpha_i] = \sum_{i=1}^{2^{n-1}} [(Poids(Y_i) + 1) * \beta_i]$$

7.  Procédé d'enrôlement selon la revendication qui précède, dans lequel les valeurs $(Y_i)$ que peut prendre la séquence Y de bits sont fixées ou tirées alé'atoirement.

8.  Procédé d'enrôlement selon l'une des revendications 6 ou 7, dans lequel le nombre de bits à 1 d'une séquence de bits $(Y \| m)$ représentant l'encodage d'un bit (m) du vecteur de masque présente un poids moyen statistiquement constant de n/2.

9.  Procédé d'enrôlement (100) selon l'une des revendications qui précèdent, comprenant en outre, après l'application de la permutation, la multiplication (140) du vecteur de masque encodé par une matrice inversible (W).

10. Procédé d'acquisition (200) d'une nouvelle donnée biométrique (I', M') comprenant un vecteur binaire d'information (I') sur un trait biométrique, et un vecteur binaire de masque (M') déterminant les bits du vecteur d'information à prendre en compte pour la comparaison, ladite donnée étant acquise pour sa comparaison avec une donnée enrôlée dans une base de données (10) par la mise en oeuvre du procédé selon l'une des revendications qui précèdent, le procédé comprenant l'application d'une permutation (230) à la nouvelle donnée biométrique, l'encodage (220) de la nouvelle donnée biométrique par un code dit de vérification (enc_vérif), la permutation étant mise en oeuvre sur la donnée encodée (enc_vérif (I', M')), et dans lequel :

    - ledit encodage et la permutation sont adaptés pour préserver la valeur de la distance de Hamming ou de la distance de Hamming pondérée entre la nouvelle donnée (I', M') et la donnée de la base (I, M) après leur encodage respectif,
    - l'encodage (220) de la nouvelle donnée comprend la représentation de chaque bit des vecteurs de la donnée par une séquence comprenant un nombre de bits égal au nombre de bits dans les séquences représentant les vecteurs encodés des données (I, M) de la base (10),
    - la permutation appliquée à la nouvelle donnée est identique à la permutation appliquée à la donnée de la base (10) lors de son enrôlement

    et la représentation des bits du vecteur de masque est en outre adaptée pour que seule l'intersection des deux séquences de bits représentant les bits de vecteurs de masques correspondant à des zones à prendre en compte pour la comparaison soit non nulle.

11. Procédé de traitement de données comprenant :

    - l'acquisition (200) d'une nouvelle donnée biométrique (I', M') par la mise en oeuvre du procédé selon la revendication 10, et
    - la comparaison de la nouvelle donnée biométrique (I', M') avec une donnée enrôlée dans une base de données (10) par la mise en oeuvre du procédé selon l'une des revendications 1 à 9, ladite comparaison comprenant le calcul d'une distance de Hamming pondérée entre la nouvelle donnée encodée par le code de vérification et la donnée encodée de la base.

**12.** Procédé de traitement (300) selon la revendication 11, dans lequel la donnée biométrique enrôlée dans la base de données (10) a été enrôlée par la mise en oeuvre du procédé de la revendication 9, et dans lequel la comparaison comprend :

- la génération d'une matrice inverse de la matrice inversible multipliée au vecteur du masque lors de l'enrôlement de la donnée de la base,
- la multiplication (320) de la séquence de bits représentant le vecteur du masque encodé de la donnée de la base par la matrice inverse, et
- le calcul d'une distance de Hamming pondérée (330) entre la nouvelle donnée encodée par le code de vérification et la donnée encodée de la base obtenue à l'issue de la multiplication.

**13.** Système (1) comprenant une base de données (10), et au moins un serveur de gestion (11) de la base de données (10), comprenant des moyens de traitement adaptés pour mettre en oeuvre, sur une donnée (I, M) comprenant deux vecteurs binaires, comprenant un vecteur binaire d'information (I) sur un trait biométrique, et un vecteur binaire de masque (M), déterminant les bits (i) du vecteur d'information à prendre en compte pour une comparaison de la donnée,
un procédé (120) d'encodage d'enrôlement (enc_enrol), comprenant :

- la représentation de chaque bit du vecteur de masque (M) en une séquence de plusieurs bits, telle que le poids moyen des représentations de l'ensemble des bits du vecteur de masque (M) est constant quelles que soient les valeurs des bits du vecteur de masque, et
- la représentation de chaque bit du vecteur d'information (I) en une séquence comprenant au moins un bit tiré aléatoirement, les bits tirés aléatoirement suivant la même loi de distribution que les bits du vecteur d'information.

**Patentansprüche**

**1.** Verfahren zur Registrierung (100) biometrischer Daten (I, M) in einer Datenbank (10), jedes Datenelement umfassend einen binären Informationsvektor (I) über ein biometrisches Merkmal, und einen binären Maskenvektor (M), der die Bits (i) des Informationsvektors bestimmt, die für einen Datenvergleich zu berücksichtigen sind, das Verfahren umfassend die Anwendung (130) einer Permutation an den Bits des Informationsvektors (I) und des Maskenvektors (M),
wobei das Verfahren **dadurch gekennzeichnet ist, dass** es des Weiteren einen Kodierschritt (120) der Vektoren durch einen so genannten Registrierungscode (enc_enrol) umfasst, wobei die Permutation an den kodierten Vektoren ausgeführt wird, und wobei die Kodierung umfasst:

- die Darstellung von jedem Bit (m) des Maskenvektors (M) in eine Sequenz mehrerer Bits, so dass die Durchschnittsmasse der Darstellungen aller Bits des Maskenvektors (M) konstant oder statistisch konstant ist, unabhängig von den Werten der Bits (m) des Maskenvektors, und
- die Darstellung von jedem Bit (i) des Informationsvektors (I) in eine Sequenz umfassend zumindest einen nach dem Zufallsprinzip gezogenen Bit (a), wobei die nach dem Zufallsprinzip gezogenen Bits dieselbe Verteilungsregel wie die Bits des Informationsvektors einhalten.

**2.** Verfahren zur Registrierung (100) nach Anspruch 1, in dem die Bitsequenz, die die Kodierung eines Bits (i) des Informationsvektors (I), das für einen Datenvergleich zu berücksichtigen ist, darstellt, zumindest ein nach dem Zufallsprinzip gezogenes Bit (a) und das Bit des Informationsvektors (i) umfasst.

**3.** Verfahren zur Registrierung (100) nach Anspruch 2, in dem die an den kodierten Vektoren (I) und (M) eingerichtete Permutation identisch ist, und die Position des Bits (i) des Informationsvektors (I) in der Bitsequenz, die die Kodierung eines Bits, das für einen Datenvergleich zu berücksichtigen ist, darstellt, der Position eines Bits bei 1 der Bitsequenz, die die Kodierung eines Bits des Maskenvektors (M) darstellt, entspricht.

**4.** Verfahren zur Registrierung (100) nach Anspruch 2, in dem die Position des Bits des Informationsvektors (I) in der Bitsequenz, die die Kodierung eines Bits, das für einen Datenvergleich zu berücksichtigen ist, darstellt, nicht der Position eines Bits bei 1 der Bitsequenz, die die Kodierung eines Bits des Maskenvektors darstellt, entspricht, und der Permutationsschritt (130) die Anwendung unterschiedlicher Permutationen an den Bitsequenzen, die die Kodierungen des Informationsvektors und des Maskenvektors darstellen, umfasst, wobei die Permutationen dazu geeignet sind, dass die Position des Bits des Informationsvektors nach der Permutation einem Bit bei 1 der Bitsequenz des kodierten Maskenvektors nach der Permutation entspricht.

5. Verfahren zur Registrierung (100) nach einem der Ansprüche 1 bis 4, in dem die Bitsequenz, die die Kodierung eines Bits (i) des Informationsvektors (I), das nicht für einen Datenvergleich zu berücksichtigen ist, darstellt, ein einziges nach dem Zufallsprinzip gezogenes Bit oder ein nach dem Zufallsprinzip gezogenes Bit und das Bit des Informationsvektors umfasst.

6. Verfahren zur Registrierung (100) nach einem der vorhergehenden Ansprüche, in dem die Bitsequenz, die die Kodierung eines Bits (m) des Maskenvektors (M) darstellt, eine Sequenz Y von n-1 Bits und das Bit (m) des Maskenvektors (M) umfasst, wobei die Sequenz Y von Bits $2^{n-1}$ Werte $Y_1,..,Y_{2^{(n-1)}}$ annehmen kann, und die Wahrscheinlichkeiten $\alpha_1,...\alpha_{2^{(n-1)}}$ den Wert $Y_1,...,Y_{2^{(n-1)}}$ zu wählen wenn das Bit des Maskenvektors 0 ist, und $b_1,...,b_{2^{(n-1)}}$ den Wert $Y_1,...,Y_{2^{(n-1)}}$ zu wählen wenn das Bit des Maskenvektors 1 ist, wie folgt sind:

$$\sum_{i=1}^{2^{n-1}} [Masse(Y_i) * \alpha_i] = \sum_{i=1}^{2^{n-1}} [(Masse(Y_i) + 1) * \beta_i]$$

7. Verfahren zur Registrierung nach vorstehendem Anspruch, in dem die Werte $(Y_i)$, die die Bitsequenz Y annehmen kann, festgelegt oder nach dem Zufallsprinzip gezogen sind.

8. Verfahren zur Registrierung nach einem der Ansprüche 6 oder 7, in dem Anzahl der Bits bei 1 einer Bitsequenz (Y‖ m), die die Kodierung eines Bits des Maskenvektors (m) darstellt, eine statistisch konstante Durchschnittsmasse von n/2 aufweist.

9. Verfahren zur Registrierung (100) nach einem der vorhergehenden Ansprüche, das des Weiteren nach der Anwendung der Permutation das Multiplizieren (140) des kodierten Maskenvektors mit einer invertierbaren Matrix (W) umfasst.

10. Verfahren zur Erfassung (200) eines neuen biometrischen Datenelements (I', M') umfassend einen binären Informationsvektor (I') über ein biometrisches Merkmal, und einen binären Maskenvektor (M'), der die Bits des Informationsvektors bestimmt, die für den Vergleich zu berücksichtigen sind, wobei das Datenelement erfasst wird für seinen Vergleich mit einem Datenelement, das in einer Datenbank (10) registriert ist, anhand der Ausführung des Verfahrens nach einem der vorhergehenden Ansprüche,
das Verfahren umfassend die Anwendung einer Permutation (230) an das neue biometrische Datenelement, die Kodierung (220) des neuen biometrischen Datenelements durch einen so genannten Verifizierungscode (enc_vérif), wobei die Permutation am kodierten Datenelement (enc_vérif (I', M')) ausgeführt wird, und in dem:

  - die Kodierung und die Permutation dazu geeignet sind, den Wert der Hamming-Distanz oder der gewichteten Hamming-Distanz zwischen dem neuen Datenelement (I', M') und dem Datenelement der Bank (I, M) nach ihrer jeweiligen Kodierung aufrecht zu erhalten,
  - die Kodierung (220) des neuen Datenelements die Darstellung von jedem Bit der Vektoren des Datenelements durch eine Sequenz umfassend eine Anzahl an Bits gleich der Anzahl der Bits in den Sequenzen, die die kodierten Vektoren der Daten (I, M) der Bank (10) darstellen, umfasst,
  - die an das neue Datenelement angewandte Permutation identisch ist mit der an das Datenelement der Bank (10) bei seiner Registrierung angewandten Permutation,

und die Darstellung der Bits des Maskenvektors ist des Weiteren dazu geeignet, dass allein die Schnittstelle der zwei Bitsequenzen, die die Bits von Maskenvektoren darstellen, die für den Vergleich zu berücksichtigenden Zonen entsprechen, nicht Null ist.

11. Verfahren zur Verarbeitung von Daten umfassend:

  - die Erfassung (200) eines neuen biometrischen Datenelement (I', M') anhand der Ausführung des Verfahrens nach Anspruch 10, und
  - den Vergleich des neuen biometrischen Datenelements (I', M') mit einem Datenelement, das in einer Datenbank (10) registriert ist, anhand der Ausführung des Verfahrens nach einem der Ansprüche 1 bis 9, wobei der Vergleich die Berechnung einer gewichteten Hamming-Distanz zwischen dem durch den Verifizierungscode kodifizierten neuen Datenelement und dem kodierten Datenelement der Bank umfasst.

12. Verfahren zur Verarbeitung (300) nach Anspruch 11, in dem das biometrische Datenelement, das in der Datenbank (10) registriert ist, anhand der Ausführung des Verfahrens nach Anspruch 9 registriert wurde, und in dem der Vergleich umfasst:

- die Generierung einer inversen Matrix der invertierbaren Matrix multipliziert mit dem Maskenvektor bei der Registrierung des Datenelements der Bank,
- das Multiplizieren (320) der Bitsequenz, die den kodierten Maskenvektor des Datenelements der Bank darstellt, mit der inversen Bank, und
- die Berechnung einer gewichteten Hamming-Distanz (330) zwischen dem neuen durch den Verifizierungscode kodierten Datenelement und dem kodierten Datenelement der Bank, das nach dem Multiplizieren erhalten wird.

13. System (1) umfassend eine Datenbank (10), und zumindest einen Server zur Verwaltung (11) der Datenbank (10), umfassend Verarbeitungsmittel, die dazu geeignet sind, an einem Datenelement (I, M) umfassend zwei binäre Vektoren, umfassend einen binären Informationsvektor (I) über ein biometrisches Merkmal, und einen binären Maskenvektor (M), der die Bits (i) des Informationsvektors, die für einen Vergleich des Datenelements zu berücksichtigen sind, bestimmt, ein Verfahren (120) zur Kodierung der Registrierung (enc_enrol) auszuführen, das Verfahren umfassend:

- die Darstellung von jedem Bit des Maskenvektors (M) in eine Sequenz mehrerer Bits, so dass die Durchschnittsmasse der Darstellungen aller Bits des Maskenvektors (M) unabhängig von den Werten der Bits des Maskenvektors konstant ist, und
- die Darstellung von jedem Bit des Informationsvektors (I) in eine Sequenz umfassend zumindest ein nach dem Zufallsprinzip gezogenes Bit, wobei die nach dem Zufallsprinzip gezogenen Bits dieselbe Verteilungsregel wie die Bits des Informationsvektors einhalten.

## Claims

1. An enrolment method (100) for enrolling biometric data (I, M) in a database (10), each data item comprising a binary information vector (I) on a biometric feature, and a binary mask vector (M), determining those bits (i) of the information vector to be taken into account for data comparison, the method comprising the application (130) of permutation to the bits of the information vector (I) and of the mask vector (M), the method being **characterized in that** it further comprises a step (120) to encode the vectors using a so-called enrolment code (enc_enrol), the permutation being applied to the encoded vectors, and said encoding comprising:

- the representation of each bit (m) of the mask vector (M) in a sequence of several bits, such that the mean weight of the representations of all the bits of the mask vector (M) is constant or statistically constant irrespective of the values of the bits (m) of the mask vector, and
- the representation of each bit (i) of the information vector (I) in a sequence comprising at least one bit drawn randomly (a), the randomly drawn bits following the same law of distribution as the bits of the information vector.

2. The enrolment method (100) according to claim 1, wherein the sequence of bits representing the encoding of a bit (i) of the information vector (I) to be taken into account for data comparison comprises at least one randomly drawn bit (a) and the bit of the information vector (i).

3. The enrolment method (100) according to claim 2, wherein the permutation applied to the encoded vectors (I) and (M) is identical and the position of the bit (i) of the information vector (I) in the sequence of bits representing the encoding of a bit to be taken into account for data comparison corresponds to the position of a bit at 1 in the sequence of bits representing the encoding of a bit of the mask vector (M).

4. The enrolment method (100) according to claim 2, wherein the position of the bit of the information vector (I) in the sequence of bits representing the encoding of a bit to be taken into account for data comparison does not correspond to the position of a bit at 1 in the sequence of bits representing the encoding of a bit of the mask vector, and the permutation step (130) comprises the application of different permutations to the sequences of bits representing the encoding of the information vector and of the mask vector, the permutations being adapted so that the position of the bit of the information vector after permutation corresponds to a bit at 1 in the sequence of bits of the encoded mask vector after permutation.

5. The enrolment method (100) according to one of claims 1 to 4, wherein the sequence of bits representing the encoding of a bit (i) of the information vector (I) not to be taken into account for data comparison comprises a single bit drawn randomly or a randomly drawn bit and the bit of the information vector.

6. The enrolment method (100) according to one of the preceding claims, wherein the sequence of bits representing the encoding of a bit (m) of the mask vector (M) comprises a sequence Y of n-1 bits and the bit (m) of the mask vector (M), the sequence Y of bits possibly having $2^{n-1}$ values $Y_1,...,Y_{2^{(n-1)}}$, and the probabilities $\alpha_1,...\alpha_{2^{(n-1)}}$ of choosing value $Y_1,...,Y_{2^{(n-1)}}$ when the bit of the mask vector is 0 and $b_1,...,b_{2^{(n-1)}}$ of choosing value $Y_1,...,Y_{2^{(n-1)}}$ when the bit of the mask vector is 1 are as follows:

$$\sum_{i=1}^{2^{n-1}} [Weight(Y_i) * \alpha_i] = \sum_{i=1}^{2^{n-1}} [(Weight(Y_i) + 1) * \beta_i]$$

7. The enrolment method according to the preceding claim, wherein the values ($Y_i$) which may be displayed by the sequence Y of bits are fixed or randomly drawn.

8. The enrolment method according to one of claims 6 or 7, wherein the number of bits at 1 in the sequence of bits (Y|| m) representing the encoding of a bit (m) of the mask vector has a statistically constant mean weight of n/2.

9. The enrolment method (100) according to one of the preceding claims, further comprising, after application of the permutation, the multiplication (140) by an inverse matrix (W) of the encoded mask vector.

10. An acquisition method (200) for acquiring a new biometric data item (I', M') comprising a binary information vector (I') on a biometric feature and a binary mask vector (M') determining those bits of the information vector to be taken into account for data comparison, said data item being acquired for comparison thereof with a data item enrolled in a database (10) by implementing the method according to one of the preceding claims,
the method comprising the application of permutation (230) to the new biometric data item, the encoding (220) of the new biometric data item by a so-called verification code (enc_verif), the permutation being applied to the encoded data item (enc_verif (I', M')), and wherein:

- said encoding and the permutation are adapted to preserve the value of the Hamming distance or weighted Hamming distance between the new data item (I', M') and the data item (I, M) in the base after their respective encoding,
- the encoding (220) of the new data item comprises the representation of each bit of the vectors of the data item by a sequence comprising an equal number of bits to the number of bits in the sequences representing the encoded vectors of the data items (I, M) in the base (10),
- the permutation applied to the new data item is identical to the permutation applied to the data item in the base (10) at the time of its enrolment,

and the representation of the bits of the mask vector is also adapted so that solely the intersection of the two sequences of bits representing the bits of mask vectors corresponding to areas to be taken into account for comparison is nonzero.

11. A data processing method comprising:

- acquisition (200) of a new biometric data item (I', M') using the method according to claim 10, and
- comparison of the new biometric data item (I', M') with a data item enrolled in a database (10) using the method according to one of claims 1 to 9, said comparison comprising the calculation of a weighted Hamming distance between the new data item encoded by the verification code and the encoded data item in the base.

12. The processing method (300) according to claim 11, wherein the biometric data item enrolled in the database (10) was enrolled by implementing the method of claim 9, and wherein the comparison comprises:

- generation of an inverse matrix of the invertible matrix multiplied with the mask vector at the time of enrolment in the database,
- multiplication (320) by the inverse matrix of the sequence of bits representing the encoded mask vector of the data item in the base, and
- calculation of a weighted Hamming distance (330) between the new data item encoded by the verification code and the encoded data item of the base obtained after multiplication.

13. A system (1) comprising a database (10) and at least one management server (11) managing the database (10), comprising processing means adapted to apply to a data item (I, M), comprising two binary vectors, comprising a binary information vector (I) on a biometric feature, and a binary mask vector (M), determining those bits (i) of the information vector to be taken into account for data comparison,
an enrolment encoding (enc_enrol) method (120), comprising:

- the representation of each bit of the mask vector (M) in a sequence of several bits, such that the mean weight of the representations of all the bits of the mask vector (M) is constant irrespective of the values of the bits of the mask vector, and
- the representation of each bit of the information vector (I) in a sequence comprising at least one bit drawn randomly, the randomly drawn bits following the same law of distribution as the bits of the information vector.

# FIG. 1

# FIG. 2

Capture / récupération donnée — 110

$(I, M)$

Encodage d'enrôlement — 120

$Enc\_enrol(I, M)$

Permutation — 130

$Perm\ (Enc\_enrol(I, M))$

Matrice inversible — 140

$(Perm\ (Enc\_enrol(I)),\ W.Perm(Enc\_enrol(M))$

Stockage — 150

100

**FIG. 3**

| 200 | 300 |
|---|---|
| Capture / récupération donnée — 210 | 310 — Récupération donnée de la base |
| (I', M') | (Perm (Enc_enrol(I)), W.Perm(Enc_enrol(M)) |
| Encodage de vérification — 220 | 320 — Matrice inverse |
| Enc_vérif(I', M') | Perm (Enc_enrol(I, M)) |
| Permutation — 230 | 330 — Comparaison |

Perm (Enc_vérif(I', M'))

EP 2 924 609 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MIKHAILJ ATALLAH et al.** *Secure Biometric Authentication for Weak Computational Devices,* 02 Août 2005
- **ULIEN BRINGER et al.** *An Application of the Naccache-Stern Knapsack Cryptosystem to Biometric Authentication,* 01 Juin 2007
- **MICHAEL J WILBER et al.** *PRIVV: Private remote iris-authentication with Vaulted Verification,* 16 Juin 2012